# FASCICULE DE BREVET EUROPEEN

(11) **EP 1 016 174 B1**
(45) Date de publication et mention de la délivrance du brevet: **28.11.2001**
(21) Numéro de dépôt: 98943985.6
(22) Date de dépôt: 15.09.1998
(51) Int. Cl.: H01S 3/0941, H01S 5/022

(54) **DISPOSITIF DE MONTAGE D'UNE TETE LASER**
VORRICHTUNG ZUR MONTAGE EINE LASERKOPFES
DEVICE FOR MOUNTING A LASER HEAD

(30) Priorité: 16.09.1997 FR 9711492
(43) Date de publication de la demande: 05.07.2000
(73) Titulaire: COMMISSARIAT A L'ENERGIE ATOMIQUE, 75015 Paris (FR)
(72) Inventeur: DESCHASEAUX, Gérard, F-91800 Brunoy (FR)
(74) Mandataire: Weber, Etienne Nicolas
(86) Numéro de dépôt international: FR9801966
(87) Numéro de publication internationale: WO9914831

(56) Documents cités:
- EP-A- 0 798 827
- US-A- 5 546 416
- B.J.LE GARREC ET ALO.: "HIGH-AVERAGE-POWER DIODE-ARRAY-PUMPED FREQUENCY-DOUBLED YAG LASER" OPTICS LETTERS, vol. 21, no. 24, 15 décembre 1996, pages 1990-1992, XP000679215

## Description

### DOMAINE TECHNIQUE ET ART ANTERIEUR

L'invention concerne la mise au point d'éléments modulaires et le montage de tels éléments modulaires en vue de la réalisation d'un dispositif de montage d'une tête amplificatrice laser, en particulier pompée par diode, cf. par exemple Optics letters, vol. 21, no. 24, 15 décembre 1996, pages 1990-1992.

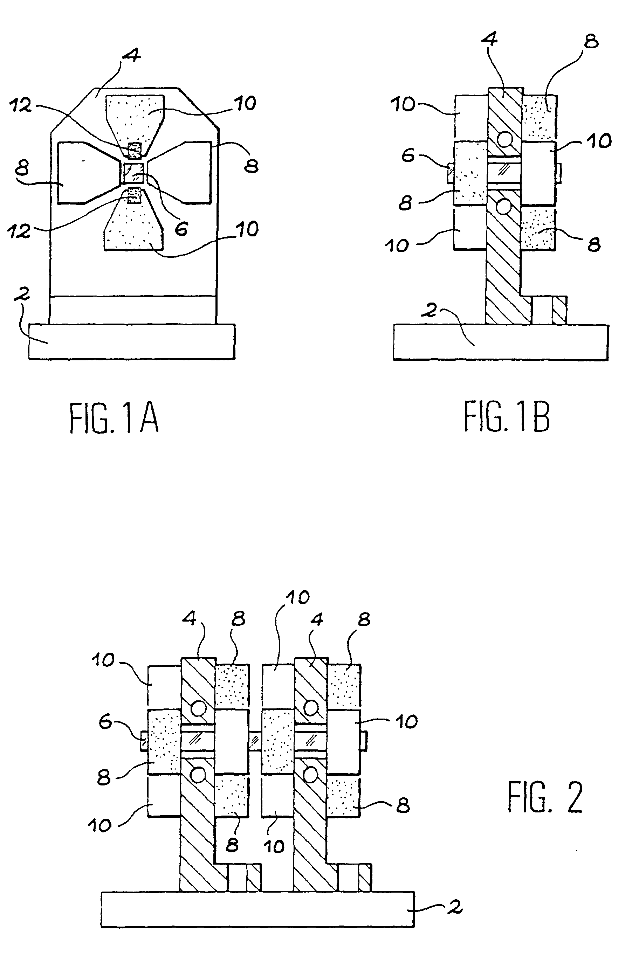

Les montages connus, utilisés pour la réalisation d'une tête amplificatrice laser pompée par diode, sont constitués, comme illustré sur les figures 1A (vue de face) et 1B (vue de côté) d'une semelle 2 sur laquelle est fixée une équerre 4 supportant tous les éléments de la tête. Dans la partie verticale de l'équerre, un trou permet le passage d'un barreau laser 6. De chaque côté, autour du trou, des brides réglables 8 positionnent le barreau verticalement et horizontalement. Des secteurs 10, préalablement montés, servent de support à des empilements 12 de diode ou de barrettes de diode. Ces secteurs sont également réglables en position par rapport au barreau 6.

Toutes les pièces sont métalliques, afin d'assurer, par la semelle 2, une évacuation thermique à partir du barreau et des diodes. L'équerre 4 peut en outre être pourvue d'une circulation d'eau, pour améliorer l'échange thermique, afin de permettre l'utilisation de la tête laser en cadence rapide.

Afin d'améliorer le rendement d'un laser, il peut être nécessaire d'en augmenter le gain. A cette fin, la longueur du barreau peut être doublée, et une deuxième équerre, avec quatre secteurs de diode, peut être mise en place à côté de la première, comme illustré sur la figure 2.

Le montage d'une tête simple (comme sur les figures 1A et 1B) est relativement facile à réaliser, car tous les éléments sont visibles et accessibles, de chaque côté de l'équerre. Le montage d'une tête double (cas de la figure 2) pose davantage de problèmes : les deux équerres étant proches l'une de l'autre, les éléments qui se trouvent entre elles sont inaccessibles et leur positionnement est très difficile. Le manque de visibilité entraîne également une grande incertitude quand à la qualité du réglage des diodes face aux barreaux.

Une autre solution de montage pourrait consister à monter deux têtes simples, séparément, en remplaçant le barreau par un leurre, en plastique ou en métal. Ensuite, on pourrait réaliser un assemblage des deux têtes en mettant en place le barreau long. Ainsi les diodes se trouveraient correctement placées. Cette solution présente malgré tout le risque certain d'endommager les diodes, en retirant les leurres ou lors du montage du barreau.

### EXPOSÉ DE L'INVENTION

Il se pose donc le problème de trouver un système mécanique simple et pratique, permettant de surmonter les inconvénients exposés ci-dessus.

En particulier, ce système doit de préférence permettre un montage des diodes en position correcte vis-à-vis du barreau, sur un support métallique, ce montage permettant un contrôle visuel du positionnement des diodes et de leur fonctionnement, électrique et optique.

En outre, de préférence, un tel montage permet l'assemblage, sur une semelle, de l'ensemble support-diode-barreau-câblage, en limitant les risques de détérioration des diodes et du barreau laser.

De préférence, le maintien du barreau est réalisé avec un maximum de contacts sur la partie métallique pour assurer les échanges thermiques.

Un système mécanique selon l'invention doit de préférence être compatible avec une circulation d'eau, pour réguler la tête thermiquement.

En vue de la réalisation d'un dispositif de fixation d'un barreau laser, l'invention a tout d'abord pour objet un module de montage de barreau laser, comportant :
- une embase métallique pour supporter une diode, ou une barrette de diodes laser, cette embase présentant une rainure, ou zone, de maintien d'une diode, ou d'une barrette de diodes,
- un support sur lequel est monté l'embase métallique, ce support présentant une zone plane d'appui d'un barreau laser, cette zone plane étant débordante, selon une direction qui lui est perpendiculaire, par rapport à la rainure, ou zone, de maintien d'une diode ou d'une barrette de diodes.

Un tel support peut présenter, en outre, dans sa partie opposée à la zone plane d'appui, deux extrémités de support.

Des trous d'assemblage peuvent être pratiqués dans les extrémités de support.

L'invention a également pour objet un dispositif de fixation d'un barreau laser comportant au moins quatre modules de montage tels que ci-dessus, les faces d'appui des différents modules de montage se faisant face deux à deux.

### BRÈVE DESCRIPTION DES FIGURES

De toute façon, les caractéristiques et avantages de l'invention apparaîtront mieux à la lumière de la description qui va suivre. Cette description porte sur les exemples de réalisation, donné à titre explicatif et non limitatif, en se référant à ces dessins annexés sur lesquels :
- les figures 1 et 2 représentent des dispositifs de montage d'un barreau laser, selon l'art antérieur,
- la figure 3 représente un module de montage d'un barreau laser selon l'invention,
- les figures 4 et 5 représentent l'assemblage de modules de montage selon l'invention, pour réaliser un dispositif de fixation d'un barreau laser selon l'invention.

### DESCRIPTION DÉTAILLÉ DE MODES DE RÉALISATION DE L'INVENTION

Un dispositif de fixation d'un barreau laser, conforme à l'invention, est un système modulaire, regroupant une pluralité de modules de montage individuel.

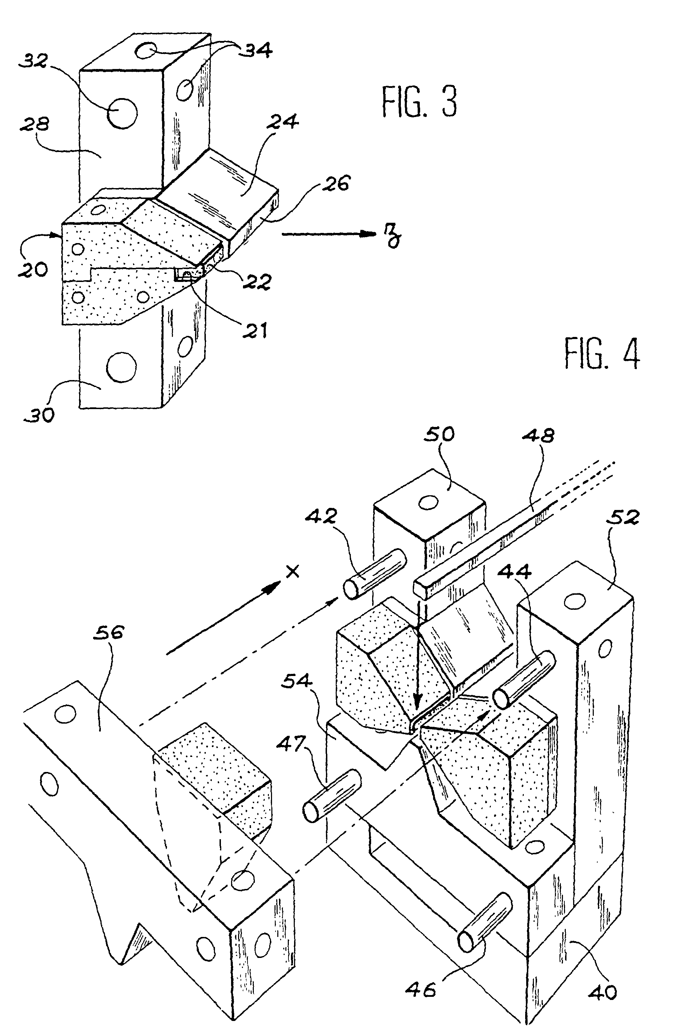

Un module de montage mis en oeuvre selon l'invention est représenté schématiquement figure 3. Un tel module comporte tout d'abord une embase métallique 20, et qui peut supporter une diode, ou une barrette 22 de diodes laser. La diode, ou barrette, est insérée dans une rainure, ou zone, 21 de maintien de la diode ou de la barrette.

Sur la figure 3, l'embase métallique 20 a une forme de secteur. Elle va en s'élargissant, depuis la zone 21 de maintien.

L'embase métallique est montée sur, ou juxtaposée à, un support 24, qui présente en particulier une zone plane d'appui 26 sur laquelle viendra s'appuyer un barreau laser. Cette zone plane 26 déborde, suivant la direction Z, qui lui est sensiblement perpendiculaire, par rapport à la rainure, ou zone, 21 de maintien d'une diode ou d'une barrette de diode.

Le support 24 a lui aussi une forme qui va en s'élargissant depuis la zone plane d'appui 26.

Le support 24 peut être prolongé, de part et d'autre, mais dans sa partie opposée à la zone plane d'appui 26 (c'est-à-dire dans sa portée la plus large), par deux extrémités de support 28, 30. Dans chacune de ces extrémités de support peuvent être pratiqués des trous de fixation 34 et/ou des trous de guidage 32 pour l'assemblage des différents modules entre eux.

Comme illustré sur la figure 4, différents modules peuvent être assemblés sur une semelle commune 40. Ils sont par exemple réunis à l'aide de cylindres 42, 44, 46, 47 placés dans des trous de guidage 32. Quatre modules 50, 52, 54, 56 permettent de former une tête, ou un dispositif, de fixation d'un barreau laser 48. Les différents modules sont associés par paires, les faces d'appui des deux modules de chaque paire étant situées en regard l'une de l'autre. Ainsi, sur la figure 4, sont associés, par paires, les modules 50, 52 et 54, 56. La mise en place du barreau 48 peut se faire après avoir assemblé trois des quatre modules, par exemple les modules 50, 52, 54. Le quatrième module 56 vient ensuite fermer l'ensemble et immobiliser le barreau 48. L'opération consiste donc en un assemblage de modules de montage, et ne pose aucun problème d'accessibilité et/ou de visibilité. L'assemblage présente en outre un minimum de risque de détérioration des diodes (ou des barrettes de diodes) et du barreau 48. Dans l'assemblage des modules par paires, on notera que les faces planes d'appui des deux modules de montage 50, 52 d'une première paire sont parallèles entre elles et sont dirigées suivant un plan perpendiculaire au plan suivant lequel sont dirigées les faces planes d'appui des deux modules 54, 56 de l'autre paire de modules de montage. Les faces planes d'appui des deux modules 54, 56 sont elles aussi parallèles entre elles.

Chaque paire de modules individuels définit donc une zone de maintien du barreau laser, entre ses deux faces planes d'appui correspondantes. La zone de maintien définie par la paire de modules 50, 52 est décalée, le long de l'axe X (parallèle au barreau 48) par rapport à la zone de maintien définie par la paire de modules 54, 56. De même, les zones entre les paires de support de diodes correspondantes sont décalées le long du même axe.

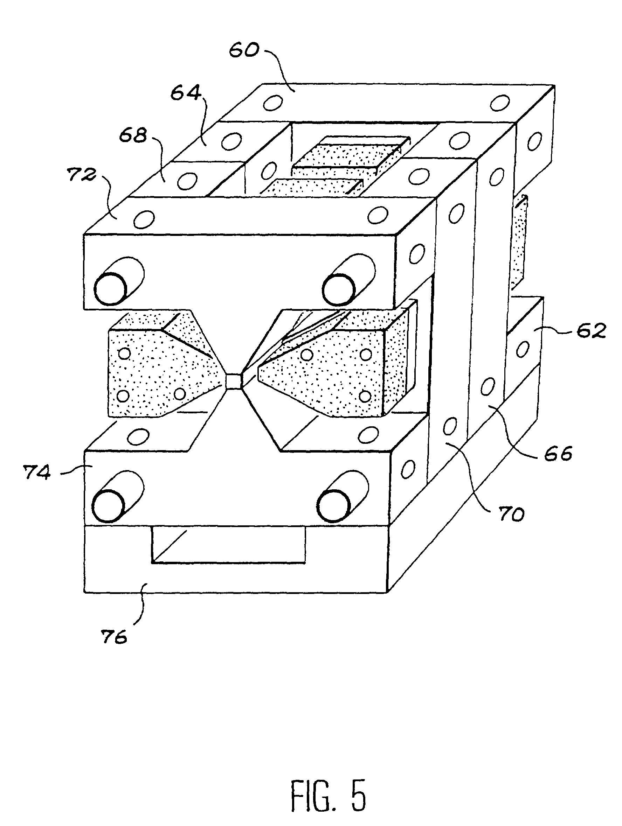

Une tête double, ou un dispositif double, de fixation d'un barreau laser peut être obtenu en assemblant huit modules 60, 62, 64, 66, 68, 70, 72, 74 sur une semelle 76, comme illustré sur la figure 5.

De manière générale, quel que soit le mode de réalisation envisagé, les cylindres d'assemblages 42, 44, 46 peuvent être remplacés par des tubes, afin de faire circuler un fluide de régulation thermique.

Le dispositif de fixation décrit ci-dessus est évolutif et peut convenir pour le montage de barreaux de dimensions différentes, et pour d'autres types de diodes, en adaptant la taille ou la forme des supports des modules.

A titre d'exemple, un tel dispositif est tout à fait adapté au montage d'un barreau carré de 4 mm de côté par 80 mm de longueur, avec huit éléments modulaires.

Avec le montage conforme à l'invention, on contrôle visuel du positionnement des diodes et de leur fonctionnement, électrique et optique. Les risques de détérioration des diodes et du barreau laser sont limités. Enfin, le système est bien compatible avec une circulation d'eau assurant une régulation thermique.

## Revendications

1. Module de montage d'un barreau laser comportant :
- une embase métallique (20) pour supporter une diode ou une barrette (22) de diodes laser, cette embase présentant une rainure, ou zone (21), de maintien d'une diode, ou d'une barrette de diodes,
- un support (24) sur lequel est monté l'embase métallique, ce support présentant une zone plane (26) d'appui d'un barreau laser, cette zone plane étant débordante, selon une direction qui lui est perpendiculaire, par rapport à la rainure, ou zone (21), de maintien d'une diode ou d'une barrette de diodes.

2. Module de montage selon la revendication 1, le support (24) présentant en outre, dans sa partie opposée à la zone plane d'appui, deux extrémités (28, 30) de support.

3. Module de montage selon la revendication 2, des trous (32) d'assemblage étant en outre pratiqués dans les extrémités de support.

4. Module de montage selon la revendication 2, des trous (34) de fixation étant en outre pratiqués dans les extrémités de support.

5. Dispositif de fixation d'un barreau laser comportant au moins quatre modules (50, 52, 54, 56) de montage selon l'une des revendications précédentes, les faces d'appui des différents modules de montage se faisant face deux à deux.

6. Dispositif de fixation selon la revendication 5, les modules de montage étant groupés par paires, les faces planes d'appui des deux modules de la première paire (50, 52) étant parallèles entre elles et dirigées suivant un plan perpendiculaire au plan suivant lequel les faces planes d'appui des deux modules de la deuxième paire (54, 56), elles aussi parallèles entre elles, sont dirigées.

7. Dispositif de fixation selon la revendication 5, les modules de montage étant groupés par paires, chaque paire de module définissant une zone de maintien d'un barreau laser, entre les deux faces planes d'appui correspondantes, les deux zones de maintien définies par les deux paires de modules étant décalées l'une par rapport à l'autre, le long d'un axe de positionnement d'un barreau laser.

## Patentansprüche

1. Modul zur Montage eines Laserstabs, umfassend:
- einen Metallsockel (20) zur Unterstützung einer Laserdiode oder einer Laserdiodenanordnung (22), wobei dieser Sockel eine Aussparung oder Zone (21) zum Festhalten einer Diode oder einer Diodenanordnung aufweist,
- einen Träger (24), an dem der Metallsockel befestigt ist, wobei dieser Träger eine ebene Zone (26) zur Abstützung eines Laserstabs aufweist und diese Zone in einer Richtung übersteht, die senkrecht zu ihr ist, bezogen auf die Aussparung oder Zone (21) zum Festhalten einer Diode oder einer Diodenanordnung.

2. Montagemodul nach Anspruch 1, wobei der Träger (24) außerdem an seinem der ebenen Abstützungszone entgegengesetzten Teil zwei Trägerenden (28, 30) aufweist.

3. Montagemodul nach Anspruch 2, wobei außerdem Zusammenbaulöcher (32) in den Trägerenden vorgesehen sind.

4. Montagemodul nach Anspruch 2, wobei außerdem Befestigungslöcher (34) in den Trägerenden vorgesehen sind.

5. Vorrichtung zur Befestigung eines Laserstabs, mit wenigstens vier Montagemodulen (50, 52, 54, 56) nach einem der vorangehenden Ansprüche, wobei die Abstützungsflächen der verschiedenen Montagemodule sich paarweise gegenüberstehen.

6. Befestigungsvorrichtung nach Anspruch 5, wobei die Montagemodule paarweise zusammengefasst sind, die ebenen Abstützungsflächen der beiden Module des ersten Paars (50, 52) entsprechend einer Ebene parallel zueinander sind, nach der die ebenen Abstützungsflächen der beiden Module des zweiten Paars (54, 56), auch sie parallel zueinander, ausgerichtet sind.

7. Befestigungsvorrichtung nach Anspruch 5, wobei die Montagemodule paarweise zusammengefasst sind und jedes Modulpaar eine Zone zum Festhalten eines Laserstabs zwischen den beiden entsprechenden ebenen Abstützungsflächen definiert, wobei die beiden Festhaltezonen, definiert durch die beiden Modulpaare, gegeneinander versetzt sind längs einer Positionierungsachse eines Laserstabs.

## Claims

1. Laser bar assembly module comprising:
- a metal base plate (20) to support a diode or a laser diodes strip (22), this base plate being provided with a groove or area (21) holding the diode or diodes strip in position,
- a support (24) on which the metal base plate is installed, this support being provided with a flat laser bar bearing surface (26), this flat surface projecting along a direction perpendicular to it beyond the groove or area (21) holding the diode or diodes strip in position.

2. Assembly module according to claim 1, the support (24) also having two support ends (28, 30) in its part opposite the flat bearing surface.

3. Assembly module according to claim 2, assembly holes (32) also being formed in the ends of the support.

4. Assembly module according to claim 2, attachment holes (34) also being formed in the ends of the support.

5. Device for attachment of a laser bar comprising at least four assembly modules (50, 52, 54, 56) according to one of the above claims, the bearing surfaces of the different assembly modules facing each other in pairs.

6. Device for attachment of a laser bar according to claim 5, the assembly modules being grouped in pairs, the flat bearing surfaces of the two modules in a first pair (50, 52) being parallel to each other and along the direction of a plane perpendicular to the direction of the plane containing the flat bearing surfaces of the second pair of modules (54, 56) that are also parallel to each other.

7. Attachment device according to claim 5, the assembly modules being grouped in pairs, each pair of modules defining a laser bar support area between its two corresponding flat bearing surfaces, the two support areas being defined by the two pairs of modules being offset from each other along a laser bar positioning axis.
